# EUROPEAN PATENT APPLICATION

(11) **EP 3 547 104 A1**
(43) Date of publication of application: **02.10.2019**
(21) Application number: 18164857.7
(22) Date of filing: 29.03.2018
(51) Int. Cl.: G06F 3/12

(54) **APPARATUS AND METHOD FOR PRINTING AND CONTROLLING EMBEDDING CASSETTES**

(71) Applicant: FATech Diagnostics Italia Srl, 63074 San Benedetto del Tronto, AP (IT)
(72) Inventor: Bertolini, Andrea Mario, SWQ3029 Swieqi (MT); Harchi, Abdelkrim, 63074 San Benedetto del Tronto (IT)
(74) Representative: Serravalle, Marco

(57) **Abstract**

The present invention is directed to an embedding cassette printer comprising: at least one hub for feeding at least one printing position; conveyor means to transport the cassettes from the hub to the at least one printing position; at least one printing head (110); at least one mean (120) to verify the correctness and the readability of the print job; release means (140) to discard the cassette if the print job is not correct or readable, or to convoy it to make it available to an operator.

The invention is also directed to a method for using the above defined printer which method comprises the following steps: submit a cassette to a print job on at least one face of the cassette, preferably the slanted face; submit the print job to verification of the readability and correctness thereof by a verification mean (120); if the print job is readable and correct, release the cassette; if the print job is not readable or incorrect, discard the cassette and proceed with printing a new cassette with the identical information of the discarded cassette.

## Description

### Technical field of the invention

The present invention is directed to an apparatus and a method for printing and controlling embedding cassettes. More particularly, the present invention is directed to an apparatus which allows printing of embedding cassettes and, after printing, it verifies that the information printed on the cassettes are readable and correspond to the data contained in the printing file.

Furthermore, the present invention is directed to a method for operating the above defined apparatus, which method allows printing the cassettes and verifying the readability and the correctness of the printed values.

### Background of the invention

Embedding cassettes are disposables very widely used in anatomical pathology labs and hospitals. Their shape is a polyhedron having rectangular base, whose section along the major axis is a right-angled trapezium, while the section along the minor axis is a rectangle. The upper base is a rectangle having its shorter side equal to the shorter side of the lower base, and its longer side shorter than the longer side of the lower base. On the slanted face of the polyhedron, information about the patient and the biological content of the cassette are usually printed.

In the last few years, laser printing is taking the place of ink printing, since the former has higher definition and durability when compared to the latter.

WO 2012/159762 discloses a embedding cassette laser printer which allows printing of three faces of the cassette thanks to gripping means which, in the presence of motors, rotate the cassette in such a way that three faces in succession are presented in front of the printing head.

Another parameter used to distinguish cassettes is the colour. Commonly, different colours are associated to different types of biological samples, or to the running year, while the patient identification code is read by the scanner.

By way of example, when the pathology lab receives a biological sample from surgery, a local ID is generated by the LIS (Laboratory Information System) and assigned to the patient. This ID number will help tracing the biological sample through the different procedures of the pathology lab. After registration of the patient, the sample is sent to the grossing room, where the pathologist, with the help of specialised technicians, examines the sample, looking for "anomalous" tissue. Part of the anomalous tissue is cut in small pieces and inserted in a special container (embedding cassette) previously marked by a dedicated printer. If the information printed on the cassette is not readable by a scanner, it will be necessary for the operator to insert all data manually. This happening produces a considerable loss of time and a possible source of error in the tracing of samples.

Therefore, it is important to provide a printing device which sharply reduces errors and allows an easy handling downstream of the embedding cassette printer.

### Summary of the invention

The present invention represents a solution of the above defined problem, since it is directed to a printer for embedding cassettes, which printer is capable of printing on at least the slanted face of the cassette, and it is afterwards capable of verifying the readability of the print job, and take the necessary steps to avoid the downstream use of non-readable cassettes. In this manner, all cassettes exiting the printer can be safely used downstream.

In one embodiment, the invention is directed to a printer for embedding cassettes comprising: at least one hub to feed the printing position; conveyor means to transport the cassettes from the hub to the printing position; at least one printing head; at least one mean to verify the readability and the correctness of the printed job; release means to discard the cassette if the print job is not correct or it is not readable.

Furthermore, the invention is also directed to a method for printing embedding cassettes by the use of the above defined printer, which method comprises the following steps: subject a cassette to a print job on at least one face, preferably the slanted face; subject the print job to a readability control by using a verification mean; in case the print job is readable and correct, release the cassette; in case the print job is not readable, discard the cassette and proceed with printing a new cassette with identical information.

### Brief description of the figures

Fig. 1 is a schematic side view of a printer according to a preferred embodiment of the invention.
Fig. 2 is a schematic front view of the printer of Fig.1.

### Detailed description of the invention

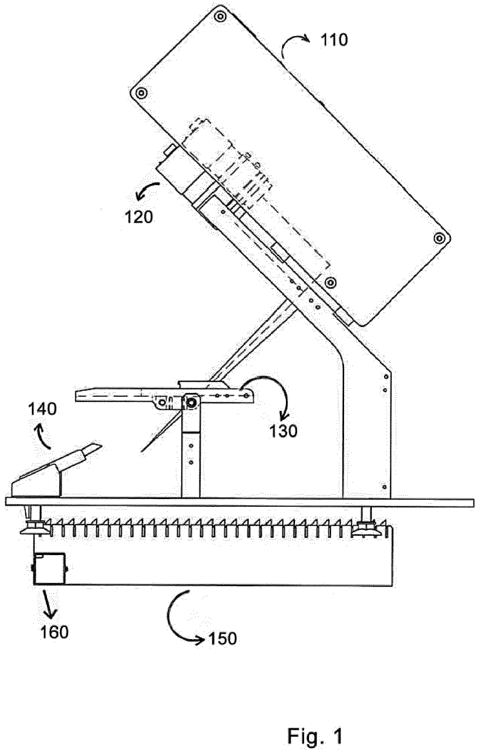

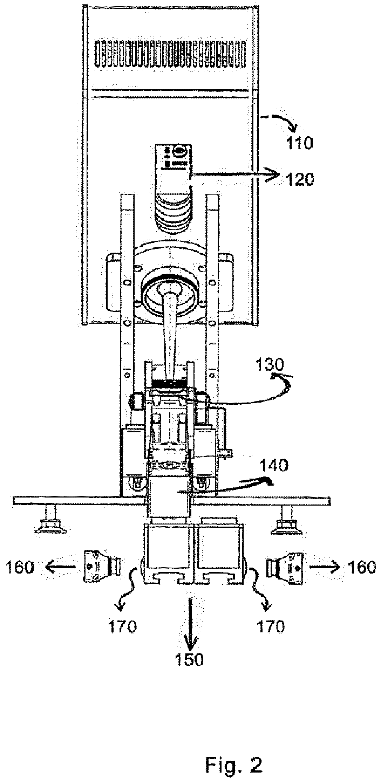

The printer depicted in Fig. 1 and 2 comprises a laser printer head 110, a camera or bar code reader 120 (with dotted lines it is indicated an integrated camera/barcode scanner), a cassette support 130 which allows a precise positioning of the cassette in the printing position. The support 130, once the printing job is ended and the correctness of the print job is verified, tilts and let the cassette drop into the guide 140, which in turn drops it in one of the positions of the collector 150. Fig. 2, clearly shows two RFID reader/writer160, laterally placed with respect to the collectors, and a TAG 170 present on each collector.

Although it is possible within the scope of the present invention the use of different types of printer (e.g. ink-jet or thermographic), the use of a laser printer is preferred since it results in a higher resolution of the print job and because of its higher durability and higher resistance to chemical agents.

Preferably, the laser printer used in the present invention is capable of printing on at least one face of the embedding cassette, more preferably the laser printer is capable of printing two or three faces of the embedding cassette.

In case the cassette is printed on two or three faces, the printer according to the invention is prepared to verify all printed faces of the cassette.

In case of laser printer, it is possible to integrate the camera or the barcode reader in the head of the laser. In this case, the image can be taken directly through the lens of the laser.

As previously stated, it is also possible to use a simple barcode scanner. However, in this case, the amount of information readable is limited to those included in the barcode. By using a camera, it is possible to verify a larger amount of data. In a preferred embodiment, the printer of the invention comprises a camera, more preferably a colour camera.

In fact, a colour camera allows to register also the colour of the cassette. As previously stated, the colour of the cassette is often used as a visual feature to indicate the type of biological sample contained in the cassette, or the running year. Thus, the use of a colour camera allows to retain also this piece of information.

The printer according to the invention also comprises at least one hub which contains the cassettes to be printed, conveyor means to transport the cassettes from the hub to the printing position. Preferably, the printer according to the invention comprises a plurality of hubs, and for example, each hub contains cassettes of different colour.

The conveyor means to transport the cassettes from the hub to the printing position preferably comprise a pusher slide slidable on a plate. In another embodiment the cassette can reach the printing position by fall, by means of a robotic arm, by extraction using a stop gate or by a dispensing mechanism as disclosed in GB 2308841.

Once the cassette has reached the printing position, the information is printed, preferably by means of a laser head. The cassette can be printed on one face only, or on several faces. In case several faces of the cassette are printed, it is possible to make use of the device disclosed in WO 2012/1597622, wherein the cassette is moved thanks to gripping means that hold the cassette and movement organs that rotate the cassette on two different rotation axes, allowing in this way the cassette to present sequentially three different faces orthogonally with respect to the axis of the laser beam.

Once the print job has been completed, the cassette undergoes the validation step by a camera or a barcode scanner and, if the validation has a positive outcome, the cassette is released and made available to an operator. If the outcome is negative, the cassette is discarded through a dedicated chute and the printer prints the identical information which had to be printed on the discarded cassette on a new cassette.

If the cassette is printed on more than one face, the validation step is performed on each printed face, preferably immediately after the face is printed. Thus, after the first face is printed, the print job is verified and if it is correct, the printer starts printing the second face, and so on. In this way, it is avoided that, in the presence of an error, other faces of the cassette are printed.

If the validation is positive, the cassette is released and made available in various ways. In one embodiment of the invention, the cassette is released by falling on a sliding tray which transports the cassette to the operator. If the printer is shared between two or more operators, it is possible for the printer to choose, based on the information received, the operator to whom the cassette is delivered, thanks to the presence of two or more sliding trays, each connected to a different operator.

Finally, it is possible to release the cassette in a horizontal collector placed under the printing position. In this case, the release generally takes place by fall and the collector preferably contains up to 30 cassettes.

In a preferred embodiment of the invention, the printer also comprises at least one RFID reader/writer placed on the body of the printer, and a TAG RFID placed on each collector of the printer, wherein the RFID reader/writer is located in front of the TAG and can write all information printed on the cassettes that sequentially arrive to the collector, which information can be transferred to the RFID reader/writer by the camera, the barcode scanner, the LIS, or introduced manually by the operator by means of the user interface. Once the collector is removed from the printer, the operator can easily access all specific information of all cassettes of the collector. When the empty collector is reinserted into its housing in the printer, all information is automatically erased.

Thus, in a preferred embodiment, the invention is directed to a printer which not only allows the reduction of errors in the print job of embedding cassettes to zero, but also allows a much easier and faster management of the printed cassettes.

## Claims

1. Embedding cassette printer comprising:
a. At least one hub for feeding at least one printing position;
b. conveyor means to transport the cassettes from the hub to the at least one printing position;
c. at least one printing head (110);
d. at least one mean (120) to verify the correctness and the readability of the print job;
e. release means (140) to discard the cassette if the print job is not correct or readable, or to convoy it to make it available to an operator.

2. Printer according to claim 1, wherein the printer is a laser printer.

3. Printer according to claim 2, wherein the mean (120) to verify the correctness and the readability of the print job is integrated in the laser.

4. Printer according to claims 1-3, wherein the mean (120) to verify the correctness and the readability of the print job is selected from a camera or a barcode scanner.

5. Printer according to claim 4, wherein the mean (120) to verify the correctness and the readability of the print job is a colour camera.

6. Printer according to claims 3-5, wherein the camera or barcode scanner verifies the correctness and the readability of the print job directly through the lens of the laser.

7. Printer according to claims 2-5, wherein the printer is capable of printing at least two faces of the embedding cassette.

8. Printer according to claims 1-7, further comprising at least one cassette collector (150) to collect the cassettes after printing, a RFID reader/writer (160) located on the body of the printer, and a TAG (170) located on the cassette collector.

9. Printer according to claims 1-8 comprising a plurality of hubs.

10. Printer according to claim 9, wherein each hub contains cassettes of a different colour.

11. Method for printing embedding cassettes by a printer according to claims 1-10, which method comprises the following steps:
a. Submit a cassette to a print job on at least one face of the cassette, preferably the slanted face;
b. Submit the print job to verification of the readability and correctness thereof by a verification mean (120);
c. If the print job is readable and correct, release the cassette;
d. If the print job is not readable or incorrect, discard the cassette and proceed with printing a new cassette with the identical information of the discarded cassette.

12. Method according to claim 11, wherein the release of the cassette in step c. takes place by allowing the cassette to fall into a collector (150) positioned below the printing position.

13. Method according to claim 11, wherein step d. is performed by discarding the cassette through a dedicated chute.

14. Method according to claim 11-13, wherein the printer also comprises a RFID reader/writer (160) and each collector (150) comprises a TAG (170), and wherein all data read by the verification mean (120) are transferred to the RFID reader/writer (160), and wherein the RFID (160) writes on the TAG (170) the data of all cassettes collected in the collector (150).

15. Method according to claims 11-14, wherein the printed faces are at least two, and are printed in succession, and after printing each face, the verification means (120) verifies the correctness and readability of the print job before starting to print the following face.
